Europäisches Patentamt

European Patent Office

Office européen des brevets

(11) Publication number: **0 415 367 A1**

# EUROPEAN PATENT APPLICATION

(21) Application number: **90116507.6**

(51) Int. Cl.⁵: **H02K 11/00**

(22) Date of filing: **28.08.90**

(30) Priority: **28.08.89 JP 220608/89**

(43) Date of publication of application:
**06.03.91 Bulletin 91/10**

(84) Designated Contracting States:
**DE FR GB**

(71) Applicant: **ASMO CO. LTD.**
**390 Umeda**
**Kosai-shi Shizuoka-ken(JP)**

(72) Inventor: **Takiguchi, Masahiro**
**1197, Okazaki, Kosai-shi**
**Shizuoka-ken(JP)**

(74) Representative: **Glawe, Delfs, Moll & Partner**
**Patentanwälte**
**Postfach 26 01 62**
**W-8000 München 26(DE)**

(54) **Noise preventing arrangement of motor.**

(57) The present invention provides an arrangement of a motor intended to prevent transmission of vibrations, i.e., noises between a noise preventing circuit and the motor. The noise preventing circuit is formed into a unit, thereby realizing simple and automatic installation thereof into the motor without giving influences upon the vibration preventing structure of brushes. According to the arrangement, the noise preventing circuit may not be used or the specifications thereof may be easily changed.

Fig. 1

EP 0 415 367 A1

## NOISE PREVENTING ARRANGEMENT OF MOTOR

### BACKGROUND OF THE INVENTION

#### Field of the Invention

The present invention generally relates to an arrangement of a motor designed to prevent generation of noises, and more particularly, to an arrangement of a motor wherein a noise preventing circuit is formed in a unit and rendered readily accommodatable within the motor.

#### Description of the Prior Art

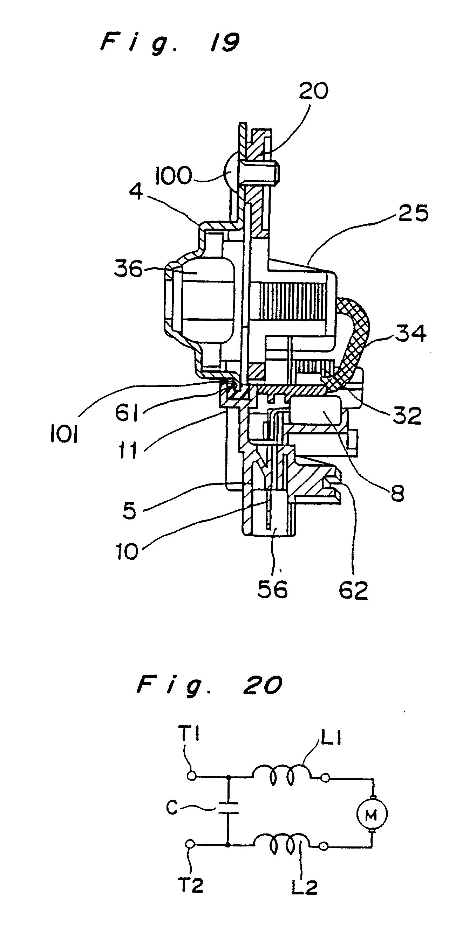

Prevention of electric noises such as leaked from a radio receiver is increasingly required in recent years. Therefore, a noise preventing circuit as shown in Fig. 20 is often added as measures against the noises of the kind referred to above. The noise preventing circuit which functions as a noise preventing element is comprised of a capacitor C and choke coils L1 and L2 provided between a motor M and terminals T1 and T2 connected to a power source. The noise preventing circuit is incorporated in the motor in some cases, or is connected outside of the motor.

Since the noise preventing circuit if it is mounted inside the motor takes up space, the circuit is conventionally often connected outside the motor. In such case, however, the circuit is not so much effective because noises are generated between the noise preventing circuit and motor. As such, a method to incorporate the noise preventing circuit in the motor is developed in the trend of research, which is however not satisfactory to meet such demands as possibility of automatic installation thereof in the motor, selective use, or change of specifications as well as prevention of vibrations of a brush.

### SUMMARY OF THE INVENTION

An essential object of the present invention is to provide a noise preventing arrangement of a motor, with eliminating the above-described inconveniences inherent in the prior art, whereby:
(1) a noise preventing circuit can be automatically installed inside a motor;
(2) a noise preventing circuit can be incorporated in the motor without affecting the vibration preventing structure of a brush;
(3) use or disuse of the noise preventing circuit can be easily selected; and

(4) specifications of the noise preventing circuit can be changed, that is, a capacitor and a choke coil, etc. can be selectively used.

In accomplishing the above-described object, in a noise preventing arrangement of a motor according to the present invention, a casing is provided for a noise preventing unit mounted detachably to an end plate of the motor, into which casing a noise preventing circuit having a noise preventing element comprised of choke coils and/or a capacitor connected to terminals is incorporated in advance, so that the noise preventing circuit is connected to a brush mounted to a brush holder fixed to the end plate, whereby the noise preventing unit is incorporated into the motor.

In another aspect of the present invention, the noise preventing circuit incorporated in the noise preventing unit is connected to the brush via a pigtail not transmitting vibrations, and furthermore, the brush holder and end plate are securely fixed by a lock washer via a vibration-proof bush. In the case, for example, where the brush holder and end plate are integrally formed, a vibration preventing member is provided in an engaging groove of the noise preventing unit to be engaged with the end plate. Accordingly, transmission of vibrations between the brush and noise preventing unit can be perfectly avoided.

In a further aspect of the present invention, the noise preventing unit is provided with a connection terminal at the side of the brush coupled to the noise preventing circuit, and moreover a coupling electrode which is to be connected to the above connection terminal when the noise preventing unit is mounted to the end plate of the motor is printed on the brush holder. Accordingly, the coupling electrode is connected to the brush held by the brush holder.

In a still aspect of the present invention, the noise preventing circuit in the noise preventing unit is provided with a choke coil and a capacitor, or only a choke coil or only a capacitor depending on the kind of the motor or the like, thereby achieving change of specifications of the noise preventing circuit. At the same time, the arrangement of the present invention can dispense with a noise preventing circuit not using both the choke coil and the capacitor. The manner how the noise preventing unit is mounted in the motor is not changed even in the case of changing the specifications of the noise preventing circuit.

In a still further aspect of the present invention, the noise preventing circuit can be mounted in the noise preventing unit simply by being pressed from one direction. Moreover, a protecting cover can be mounted only by being pressed from the same one direction after the noise preventing circuit is mounted. The noise preventing unit is securely fixed only by being fitted into the end plate from one direction.

Because of the above-described arrangement, according to the present invention, the noise preventing circuit is remarkably simply and automatically incorporated into the motor. Since the noise preventing unit and brush are connected in a manner not to permit transmission of vibrations therebetween, the noise preventing circuit can be incorporated into the motor without giving influences upon the vibration preventing structure of the brush. Moreover, it is easy to change and select noise preventing elements of the noise preventing circuit, so that the use or disuse of the noise preventing circuit can be easily selected and the change of specifications thereof can be readily achieved.

## BRIEF DESCRIPTION OF THE DRAWINGS

This and other objects and features of the present invention will become apparent from the following description taken in conjunction with preferred embodiments thereof with reference to the accompanying drawings, in which:

Fig. 1 is a front elevational view of a part of a motor having a noise preventing unit incorporated therein according to a first embodiment of the present invention;

Fig. 2 is a cross sectional view taken along the line A-A of Fig. 1;

Fig. 3 is a side sectional view of Fig. 1;

Fig. 4 is a front elevational view of the noise preventing unit;

Fig. 5 is a side sectional view of Fig. 4;

Fig. 6 is a cross sectional view taken along the line B-B of Fig. 4;

Fig. 7 is a view showing a process for mounting the noise preventing unit;

Fig. 8(I) is a view showing one example of how.a noise preventing circuit is assembled;

Fig. 8(II) is a circuit diagram of Fig. 8(I);

Fig. 9(I) is a view showing the other example of how the noise preventing circuit is assembled;

Fig. 9(II) is a circuit diagram of Fig. 9(I);

Fig. 10(I) is a view showing a further example of how the noise preventing circuit is assembled;

Fig. 10(II) is a circuit diagram of Fig. 10(I);

Fig. 11(I) is a view showing one example when the noise preventing circuit is not provided;

Fig. 11(II) is a circuit diagram of Fig. 11(I);

Fig. 12 is a side sectional view of a noise preventing unit according to a second embodiment of the present invention;

Fig. 13 is a view how a coupling terminal is mounted in the unit of Fig. 12;

Fig. 14 is a view showing the relation between the noise preventing unit of Fig. 12 and a brush holder;

Fig. 15(I) is a front elevational view of a noise preventing unit according to a third embodiment of the present invention;

Fig. 15(II) is a side sectional view of Fig. 15(I);

Fig. 16(I) is a cross sectional view taken along the line C-C of Fig. 15;

Fig. 16(II) is a circuit diagram of Fig. 16(I);

Fig. 17(I) is a front elevational view of a noise preventing unit according to a fourth embodiment of the present invention;

Fig. 17(II) is a circuit diagram of Fig. 17(I);

Fig. 18 is a view similar to Fig. 1 according to a fifth embodiment of the present invention;

Fig.19 is a fragmentary sectional view on an enlarged scale showing a sixth embodiment of the present invention; and

Fig. 20 is an example of a circuit diagram of a noise preventing circuit.

## DETAILED DESCRIPTION OF PREFERRED EMBODIMENTS

Before the description of the present invention proceeds, it is to be noted here that like parts are designated by like reference numerals throughout the accompanying drawings.

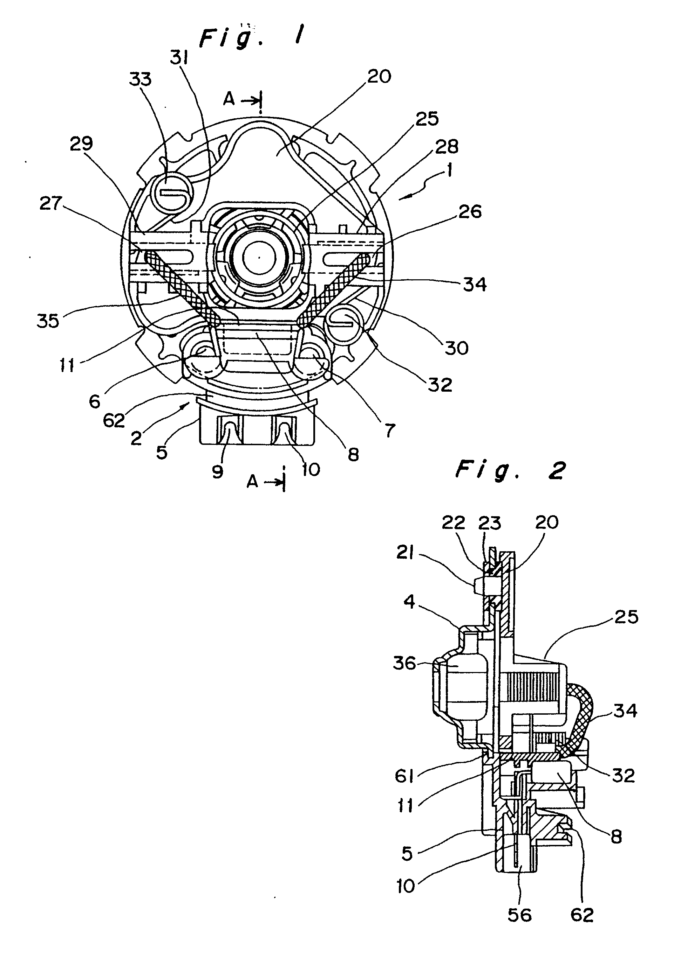

Referring to Figs. 1-3, there is indicated a motor 1 having a noise preventing unit 2 incorporated therein. The noise preventing unit 2 is detachably fixed to an end plate 4 in the interior enclosed by a motor housing 3 and the end plate 4 mounted at an opening end of the housing 3.

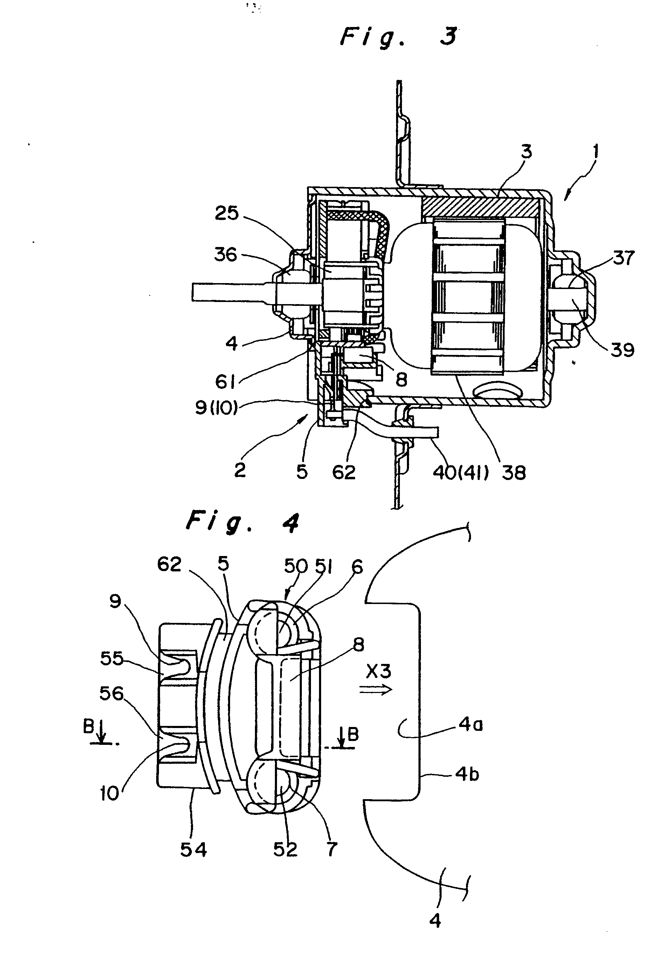

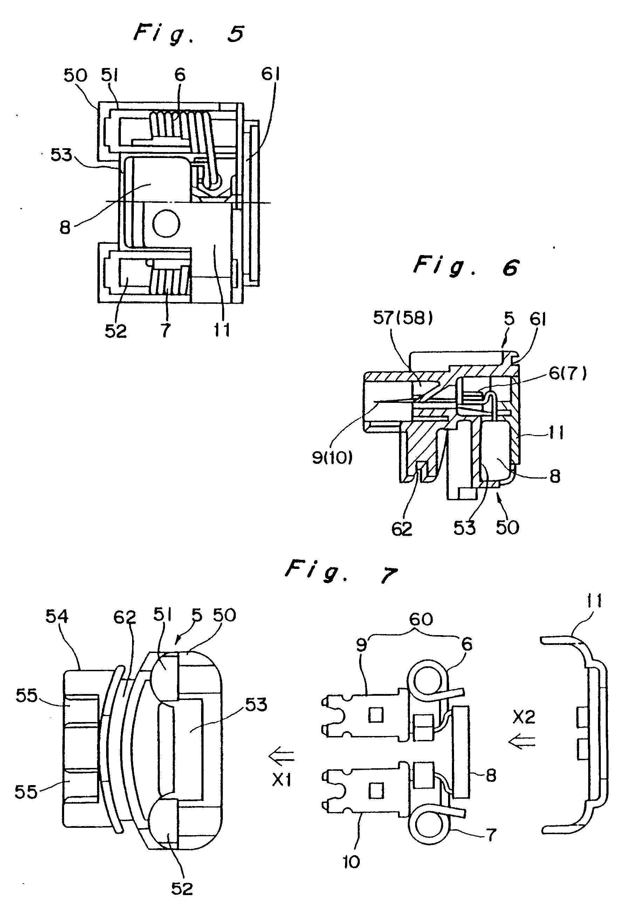

The noise preventing unit 2 is in such a structure as shown in Figs. 4-7. Specifically, the noise preventing unit 2 is comprised of a casing 5 made of an insulative body in the shape shown in the drawings, choke coils 6 and 7, a capacitor 8, terminals 9 and 10, and a protecting cover 11. The choke coils 6 and 7, capacitor 8 and terminals 9 and 10 are all detachably mounted to the casing 5. The protecting cover 11 is mounted to the casing 5 so as to avoid shortcircuiting of the components 6-10.

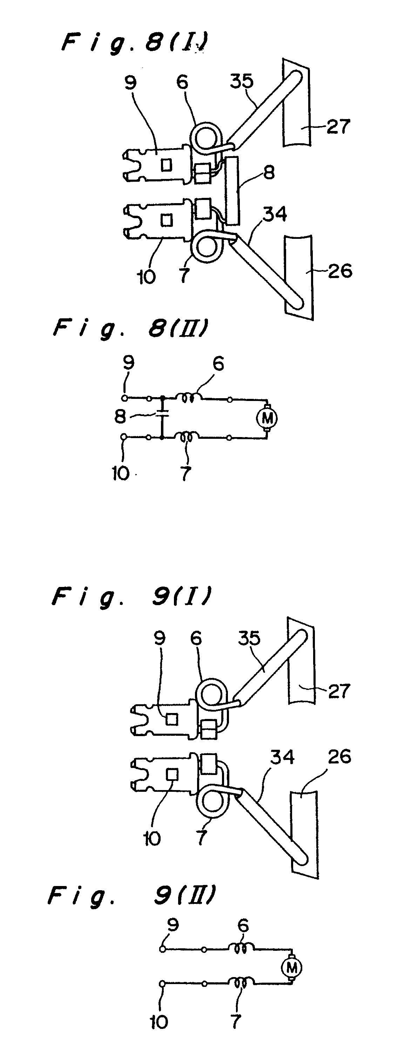

The casing 5 has a part 50 which is detachably engaged with a rectangular recess 4a notched in a part of an outer periphery of the end plate 4. At an end of a substrate of the part 50 where a noise preventing circuit is mounted, there are formed an engaging groove 61 into which a front edge 4b of the recess 4a is held, and an engaging groove 62 which is engaged with a yoke 3a of the housing 3. A pair of housing parts 51 and 52 in a semi-cylindrical shape are also provided in the mounting part 50 to accommodate the choke coils therein. At the same time, an opening section 53 is defined between the housing parts 51 and 52 so as to accommodate the capacitor. The casing 5 is integrally formed with a terminal connecting unit 54 from the outer periphery of the mounting part 50. The terminal connecting unit 54 has a pair of terminal connecting ports 55 and 56 opened at the outer surface of the unit 54. These connecting ports 55 and 56, passing through the interior of the casing 5, communicate with terminal mounting parts 57 and 58 opened to the inner surface of the noise preventing circuit mounting part 50. As shown in Fig. 8, the terminals 9 and 10 to be mounted to the terminal mounting parts 57 and 58, choke coils 6 and 7 to be accommodated in the housing parts 51 and 52 and capacitor 8 to be housed in the opening section 53 are preliminarily connected as a circuit unit 60. This circuit unit 60 is pressed into the casing 5 from a direction shown by an arrow X1, so that the circuit 60 is detachably mounted to the casing 5. Thereafter, the protecting cover 11 is pressed to the casing 5 from the same direction shown by an arrow X2. As a result, the noise preventing unit 2 is integrally assembled. When the noise preventing unit 2 is inserted into the recess 4a of the end plate 4 from a direction shown by an arrow X3 in Fig. 4, and the engaging groove 61 is engaged with the front edge 4b of the end plate 4, the noise preventing unit 2 is positioned in a back-and-forth and a left-and-right directions and detachably fixed.

The end plate 4 to which is fixed the noise preventing unit 2 has a brush holder 20, as indicated in Figs. 1-3, fixed at three points by a lock washer 21. In mounting the brush holder 20, a bush 22 having vibration preventing property is intervened between the brush holder 20 and end plate 4. At the same time, the end plate 4 is held between the bush 22 and an outer bush 23. Accordingly, vibrations of the brush holder 20 are hardly transmitted to the end plate 4.

A commutator 25 stands at the central part of the brush holder 20 between brush guides 28 and 29 which respectively slidably hold brushes 26 and 27. Further, spring retainers 32 and 33 are provided in the lateral of the brush guides 28 and 29 to mount springs 30 and 31 which urge the brushes. The pair of the brushes 26 and 27 inserted to the brush guides 28 and 29 of the brush holder 20 from respective outer openings of the guides are connected in advance with the above-described choke coils 6 and 7 via pigtails 34 and 35. The brushes 26 and 27 are therefore integrally assembled with the circuit unit 60 of the noise preventing unit 2 through the pigtails 34 and 45. After these brushes 26 and 27 are inserted into the brush guides, the outer end faces of the brush guides are urged by the springs 30 and 31, thereby letting the inner end faces of the guides pressed in contact with the commutator 25. Accordingly, the brushes 26 and 27 are connected to the choke coils 6 and 7 of the noise preventing unit 2 via the pigtails 34 and 35 without transmission of vibrations.

As described hereinabove, after the noise preventing unit 2 and brush holder 20 are secured to the end plate 4, the end plate 4 is placed at an opening of the housing 3 so that a shaft 39 of an armature 38 is supported by bearing parts 36 and 37 provided in the end plate 4 and housing 3, respectively. Then, the end plate 4 is secured to the housing 3. At this time, the engaging groove 62 formed in the casing 5 of the unit 2 are securely engaged to a corresponding end part of the housing 3. In the state where the noise preventing unit 2 is incorporated in the motor 1 as in the above-described manner, the terminal connecting part 54 of the unit 2 projects outside of the housing 3, with the terminals 9 and 10 within the connecting ports 55 and 56 being connected to lead wires 40 and 41. The lead wires 40 and 41 are sequentially connected to the terminals 9 and 10

Ð

choke coils 6 and 7 (capacitor 8 is intervened between the chokes 6 and 7)

Ð

pigtails 34 and 35

Ð

brushes 26 and 27, so that a driving voltage is applied along this route to actuate the motor.

In the structure as above, the circuit unit 60 which is comprised of the choke coils 6 and 7 and capacitor 8 formed in one unit is intervened between the terminals 9 and 10 connected to the brushes 26 and 27. Moreover, the noise preventing unit 2 is easily mounted through engagement with the end plate 4 and housing 3. Therefore, the noise preventing unit can be incorporated into the motor in a simple manner. In addition, the noise preventing unit 2 can be assembled with the circuit unit 60 and protecting cover 11 simply by pressing these unit 60 and cover 11 one by one to the casing 5 from the same direction. Accordingly, the noise preventing unit 2 can be assembled and moreover incorporated into the motor automatically.

The noise preventing unit 2 is fixed to the end plate 4 which is fixed to the brush holder 20 through vibration preventing bushes 22 and 23.

The noise preventing unit 2 is connected to the brushes 26 and 27 through the pigtails 34 and 35. Therefore, vibrations of the brush holder 20 are attenuated by the bushes 22 and 23 and pigtails 34 and 35, and accordingly hardly transmitted to the end plate 4 and noise preventing unit 2.

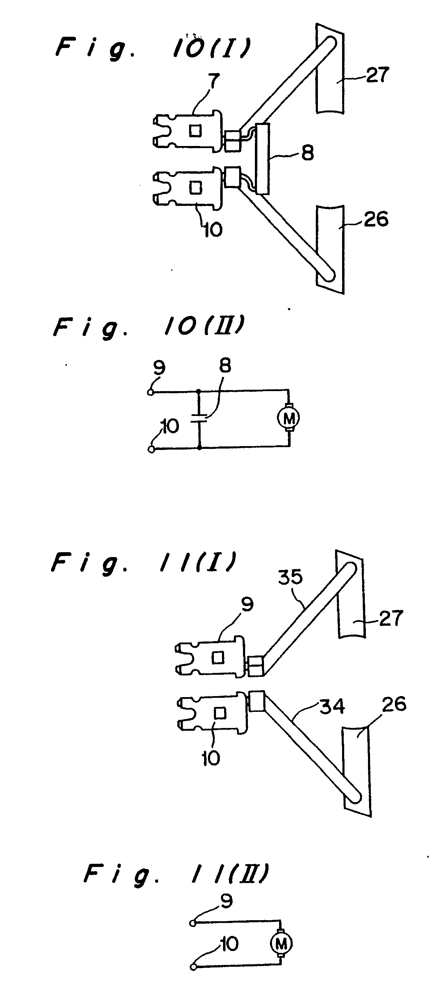

Meanwhile, when it is not required to prevent noises or specifications of the noise preventing circuit should be changed in accordance with the kind of the motor, it is enough to change the noise preventing elements (choke coils and capacitor) of the circuit unit 60 in the noise preventing unit 2 from as shown in Fig. 9 to Fig. 12, without requiring any change in the mounting process. More specifically, Figs. 8(I) and 8(II) show an example when the choke coils 6 and 7 and capacitor 8 are assembled into the noise preventing circuit 60 as described in the foregoing embodiment. Figs. 9(I) and 9(II) show an example when only the choke coils 6 and 7 are incorporated into the noise preventing circuit 60. Moreover, Figs. 10(I) and 10(II) show an example when only the capacitor 8 is mounted in the noise preventing circuit 60, Figs. 11(I) and 11(II) representing a case where neither choke coils nor capacitor are mounted since the noise preventing circuit is unnecessary. In any case, there is no change in the structure that the casing 5 is fixed to the end plate 4, and engaged with the housing 3. Therefore, no change is encountered in the assembling process of the noise preventing unit into the motor.

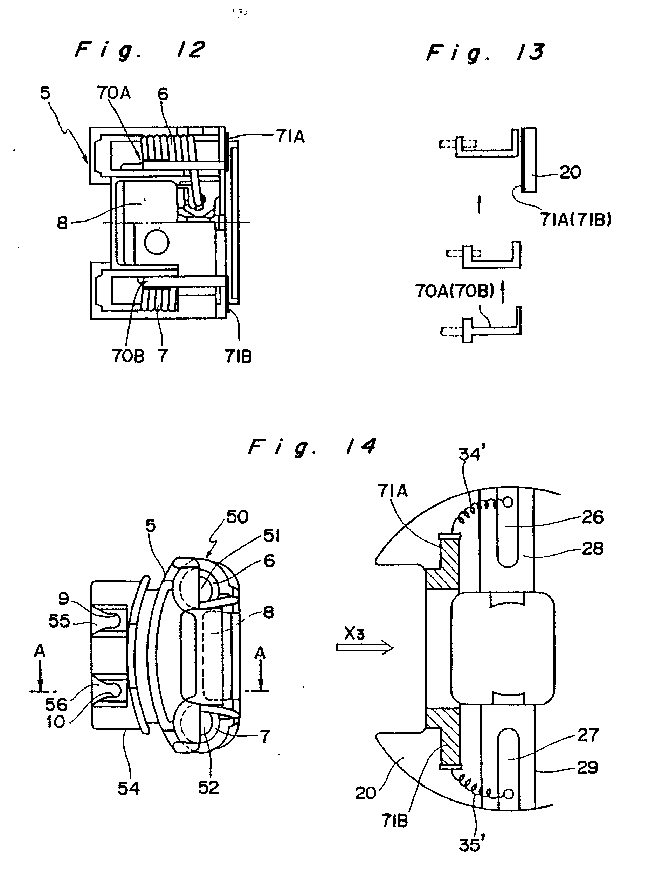

The present invention is not restricted to the above-described first embodiment. According to a second embodiment thereof shown in Figs. 12-14, the noise preventing circuit 60 of the noise preventing unit 2 can be connected to the brushes 26 and 27 only by inserting the unit 2 into the end plate 4.

In other words, the choke coils 6 and 7 of the circuit 60 are caulked to coupling terminals 70A and 70B, thereby realizing connection of the circuit 60 with the choke coils. On the other hand, the brush holder 20 has coupling electrodes 71A and 71B printed as indicated in Fig. 14. The coupling electrodes are electrically connected to the above-referred coupling terminals 70A and 70B when the noise preventing unit 2 is inserted into the end plate 4 which securely supports the brush holder 20. Moreover, these coupling electrodes 71A and 71B are connected in advance to the brushes 26 and 27 via pigtails 34' and 35'.

In the modified embodiment described hereinabove, it is not necessary to preliminarily connect the noise preventing circuit 60 with the brushes 26 and 27.

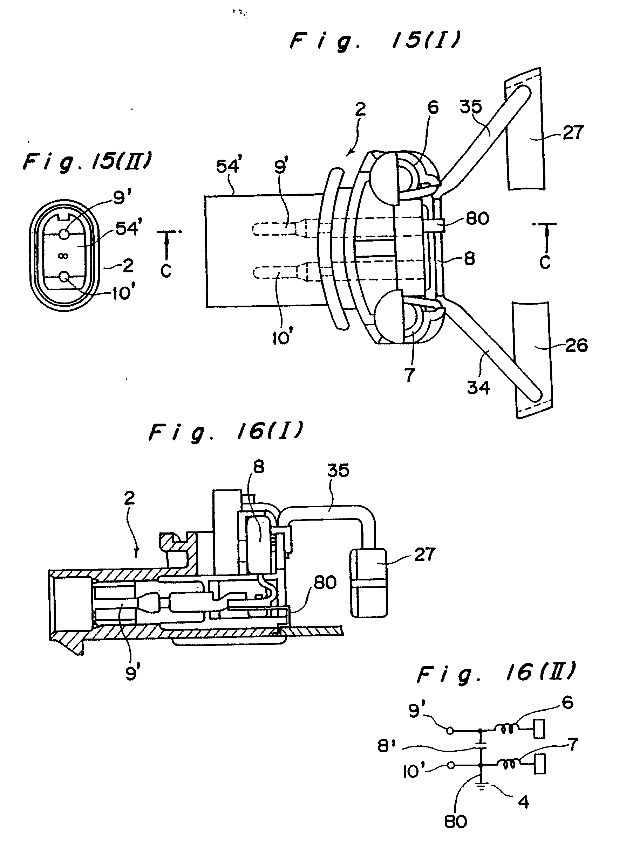

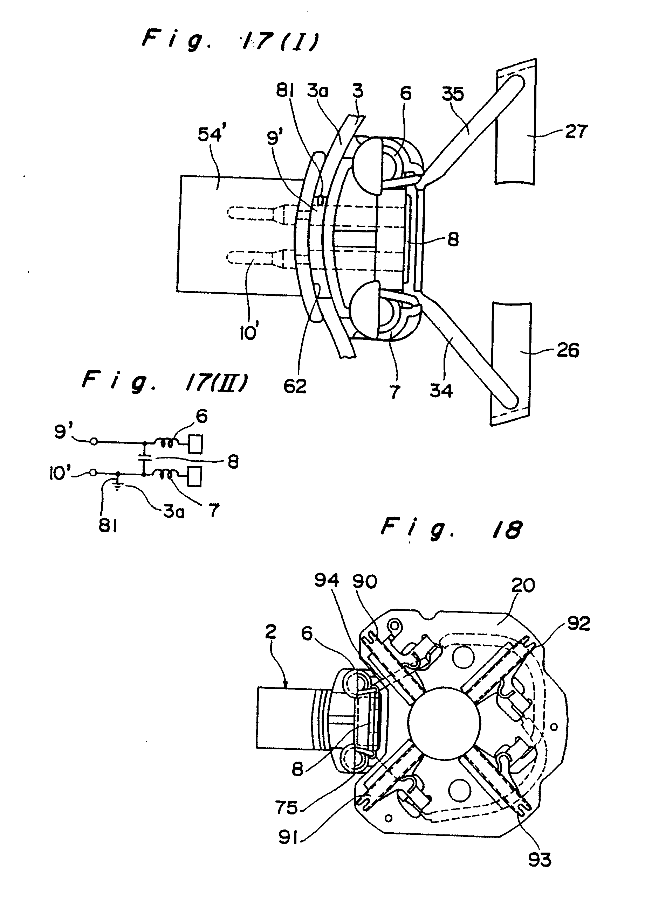

The noise preventing unit 2 according to the present invention becomes able to be directly connected to an external connector if the shape of the casing 5 and terminals 9 and 10 is changed. That is, according to a third embodiment shown in Figs. 15 and 16 and a fourth embodiment shown in Fig. 17, the noise preventing unit 2 is provided with terminals 9' and 10' at an opening in the terminal connecting part 54' so that the unit 2 is directly coupled to the external connector. In the third embodiment, a terminal 80 is further added for earthing which is connected to the noise preventing circuit 60 in the noise preventing unit 2 and also connected to the end plate 4 when the noise preventing unit 2 is coupled to the end plate 4. Likewise, a terminal 81 is connected to the noise preventing circuit 60 in the fourth embodiment, which is connected to the yoke 3a of the housing 3 for earthing.

Fig. 18 illustrates a fifth embodiment of the present invention. According to the fifth embodiment, a tetrode motor with tetrode brushes 90, 91, 92 and 93 is buried in the noise preventing unit 2. The choke coils 6 and 7 of the noise preventing unit 2 are connected with the brushes through lead wires 94 and 95.

Referring further to Fig. 19 showing a sixth embodiment of the present invention, the end plate 4 and brush holder 20 are rigidly secured by a screw 100. According to this embodiment, in order to prevent transmission of vibrations from the brush holder 20 to the noise preventing unit 2 through the end plate 4, a vibration preventing member 101 made of rubber is attached to the inner surface of the engaging groove 61 provided in the casing 5 of the unit. The vibration preventing member is provided also when the brush holder 20 is integrally formed with the end plate 4. Accordingly, owing to the vibration preventing member 101 between the end plate 4 and noise preventing unit 2, vibrations of the brushes are prevented from being transmitted to the noise preventing unit through the end plate 4.

It is needless to say that transmission of the vibrations can be effectively prevented if the vibration preventing member is provided in the inner surface of the engaging groove 61 in the first embodiment wherein the brush holder 20 is fixed to the end plate 4 through a vibration preventing mechanism.

As is made clear from the foregoing description of the embodiments, according to the present invention, the noise preventing circuit is formed in a unit, and moreover, the unit is automatically installed into the motor. Accordingly, the noise preventing mechanism can be easily incorporated in the motor. Furthermore, the end plate to which is fixed the noise preventing unit is provided with the brush holder through the vibration preventing mechanism, or the noise preventing unit and end plate are assembled through the noise preventing mechanism. At the same time, the noise preventing circuit in the unit is connected to the brushes via pigtails. Because of this arrangement, the transmission of vibrations between the noise preventing unit and brushes can be almost perfectly prevented, without giving any influence upon the vibration preventing structure of the brushes. Moreover, the noise preventing elements installed in the noise preventing circuit can be selected or can be totally dispensed with. Even when the noise preventing elements are changed, the mounting mechanism thereof into the motor is not changed. Therefore, according to the present invention, the use or disuse of the noise preventing circuit, and the change of specifications of the noise preventing circuit can be easily achieved.

## Claims

1. A noise preventing arrangement of a motor, comprising:

a casing;

a noise preventing unit detachably mounted to an end plate of a motor and having a noise preventing circuit preliminarily installed in said casing;

said noise preventing circuit having a noise preventing element composed of a choke coil, a capacitor, etc. connected to a terminal,

a brush holder fixed to said end plate; and

a pair of brushes,

whereby said noise preventing unit is incorporated into said motor through connection of said noise preventing circuit with said brushes.

2. A noise preventing arrangement of a motor as claimed in claim 1, wherein said end plate to which is fixed said noise preventing unit is fixed to said brush holder by a lock washer through a bush having vibration preventing property, and said noise preventing circuit is connected with said brushes through pigtails, so that transmission of vibrations between said brushes and noise preventing unit is almost completely prevented.

3. A noise preventing arrangement of a motor as claimed in claim 1, wherein said noise preventing unit is formed with an engaging groove to be engaged with said end plate, and a vibration preventing member is mounted in said engaging groove, so that transmission of vibrations from said end plate to said noise preventing unit is prevented.

4. A noise preventing arrangement of a motor as claimed in claim 1, wherein a connection terminal is provided in said noise preventing circuit of the noise preventing unit, while a coupling electrode is formed in said brush holder, characterized in that said terminal is connected with said coupling electrode when said noise preventing unit is mounted to said end plate.

5. A noise preventing arrangement of a motor as claimed in any of claims 1, 2, 3 and 4, wherein said noise preventing circuit of the noise preventing unit is selectively provided with a choke coil and a capacitor, only a choke, or only a capacitor.

6. A noise preventing arrangement as claimed in any of claims 1, 2, 3 and 4, wherein said noise preventing circuit of the noise preventing unit can be provided only with a terminal for connection to an external power source, without being provided with said noise preventing element composed of a choke coil and a capacitor, so that said noise preventing circuit may not be used since said terminal is connected to said brushes when said noise preventing unit is mounted into the motor.

7. A noise preventing arrangement of a motor as claimed in any of claims 1, 2, 3, 4, 5 and 6, wherein said noise preventing circuit can be mounted to said noise preventing unit only by being pressed into said casing from one direction, and a protecting cover can be mounted from the same direction after said noise preventing circuit is mounted.

8. A noise preventing arrangement of a motor as claimed in any of claims 1, 2, 3, 4, 5, 6, and 7, wherein said casing of the noise preventing unit is fixedly positioned by being engaged with said end plate of the motor from one direction.

*Fig. 1*

*Fig. 2*

*Fig. 3*

*Fig. 4*

Fig. 5

Fig. 6

Fig. 7

**Fig. 8(I)**

**Fig. 8(II)**

**Fig. 9(I)**

**Fig. 9(II)**

10

Fig. 10(I)

Fig. 10(Ⅱ)

Fig. 11(I)

Fig. 11(Ⅱ)

# Fig. 12

# Fig. 13

# Fig. 14

Fig. 15(I)

Fig. 15(II)

Fig. 16(I)

Fig. 16(II)

Fig. 17(I)

Fig. 17(II)

Fig. 18

Fig. 19

Fig. 20

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WO-A-8906875 (ELECTRO-MECHANICAL PRODUCTS)<br>* page 4, lines 11 - 15 *<br>* page 11, line 18 - page 12, line 2; figures 1-4 * | 1, 5, 7, 8 | H02K11/00 |
| X | GB-A-2186439 (MITSUBISHI DENKI K.K.)<br>* page 2, lines 12 - 85; figures 1-3 * | 1, 8 | |
| X | DE-B-2813956 (SIEMENS AG.)<br>* column 4, lines 55 - 57; figure 3 * | 1 | |

TECHNICAL FIELDS
SEARCHED (Int. Cl.5)

H02K
H01R

The present search report has been drawn up for all claims

| Place of search | Date of completion of the search | Examiner |
|---|---|---|
| BERLIN | 04 DECEMBER 1990 | LEOUFFRE, M |